(19) Europäisches Patentamt

European Patent Office

Office européen des brevets

(11) Veröffentlichungsnummer: **0 283 577 B1**

# (12) EUROPÄISCHE PATENTSCHRIFT

(45) Veröffentlichungstag der Patentschrift: **11.11.92**

(51) Int. Cl.⁵: **B60J 7/12**

(21) Anmeldenummer: **87118477.6**

(22) Anmeldetag: **14.12.87**

(54) **Klappverdeck für Personenwagen.**

(30) Priorität: **26.03.87 DE 3709927**

(43) Veröffentlichungstag der Anmeldung:
**28.09.88 Patentblatt 88/39**

(45) Bekanntmachung des Hinweises auf die
Patenterteilung:
**11.11.92 Patentblatt 92/46**

(84) Benannte Vertragsstaaten:
**DE ES FR GB IT**

(56) Entgegenhaltungen:
**AT-B- 105 395**
**DE-C- 3 127 524**
**FR-A- 593 125**

**PATENT ABSTRACTS OF JAPAN, Band 11,**
**Nr. 54 (M-563)(2501), 19. Februar 1987**

(73) Patentinhaber: **Dr.Ing.h.c. F. Porsche Aktien-**
**gesellschaft**
**Porschestrasse 42**
**W-7000 Stuttgart 40(DE)**

(72) Erfinder: **Kolb, Eugen**
**Ernst-Bloch-Weg 11**
**W-7000 Stuttgart 30(DE)**

## Beschreibung

Die Erfindung bezieht sich auf ein Klappverdeck für Personenwagen, das ein Verdeckgestänge mit einem aufbauseitig gelagerten Hauptspriegel, seitlichen Längsholmen und einem Gelenkhebelsystem umfaßt, wobei jeder Längsholm über einen Dachrahmenlenker und einen Winkelhebel gelenkig mit dem Hauptspriegel verbunden ist, wobei jeder Längsholm und der jeweilige Dachrahmenlenker die Arme einer Schere bilden, so daß das Klappverdeck von einer Schließstellung in eine zurückgeklappte Offenstellung bewegbar ist und umgekehrt.

Ein bekanntes Klappverdeck der eingangs genannten Gattung (DE-C-31 27 524) weist eine gute Funktion auf und zeichnet sich durch einen einfachen Aufbau aus. Jedoch sind an diesem Klappverdeck keinerlei Vorkehrungen getroffen, um das Klappverdeck in seiner zurückgeklappten Offenstelllung - insbesondere in Höhenrichtung - zu fixieren. Deshalb kann das Klappverdeck im Fahrbetrieb infolge von Straßenunebenheiten oder dergleichen selbsttätig hochgeschwenkt werden, was störend ist und Sichtbeeinträchtigungen nach hinten zur Folge hat.

Bei einem anderen bekannten Klappverdeck (AT-B-105 395) ist eine Arretiereinrichtung zur Fixierung von Verdeckteilen vorgesehen, wobei die Arretiereinrichtung einen am unteren Ende des Hauptspriegels angeordneten Querarm mit einer hakenförmigen Ausnehmung umfaßt, in welche an einem vorderen Spriegel angebrachte Bolzen bei zusammengeklapptem Verdeck eingreifen.

Bei diesem Klappverdeck werden durch die Arretiereinrichtung einzelne Verdeckteile gegeneinander fixiert. Es sind jedoch keine Vorkehrungen getroffen, um ein Hochschwenken des gesamten Klappverdeckes infolge von Stößen bzw. von Straßenunebenheiten oder dergleichen zu vermeiden.

Aufgabe der Erfindung ist es, an einem Klappverdeck solche Maßnahmen zu treffen, daß ein Hochschwenken des Klappverdecks in seiner zurückgeklappten Offenstellung vermieden wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hautpsächlich erzielten Vorteile sind darin zu sehen, daß das Klappverdeck durch eine lösbare Arretiereinrichtung in seiner zurückgeklappten Offenstellung fixiert ist, so daß ein ungewolltes Hochschwenken des Klappverdecks zuverlässig vermieden wird. Die Arretiereinrichtung weist einen einfachen Aufbau auf und läßt sich leicht montieren.

Ein Ausführungsbeispiel der Erfindung ist in der Zeichnung dargestellt und wir im folgenden näher erläutert.

Es zeigt

Fig. 1 eine Teilseitenansicht eines Klappverdecks in seiner Schließstellung,

Fig. 2 eine Teilseitenansicht des Klappverdecks in der zurückgeklappten Offenstellung,

Fig. 3 einen Schnitt nach der Linie III-III der Fig. 2 mit der erfindungsgemäßen Arretiereinrichtung,

Fig. 4 einen Schnitt entsprechend Fig. 3 einer weiteren Ausführungsform der Arretiereinrichtung.

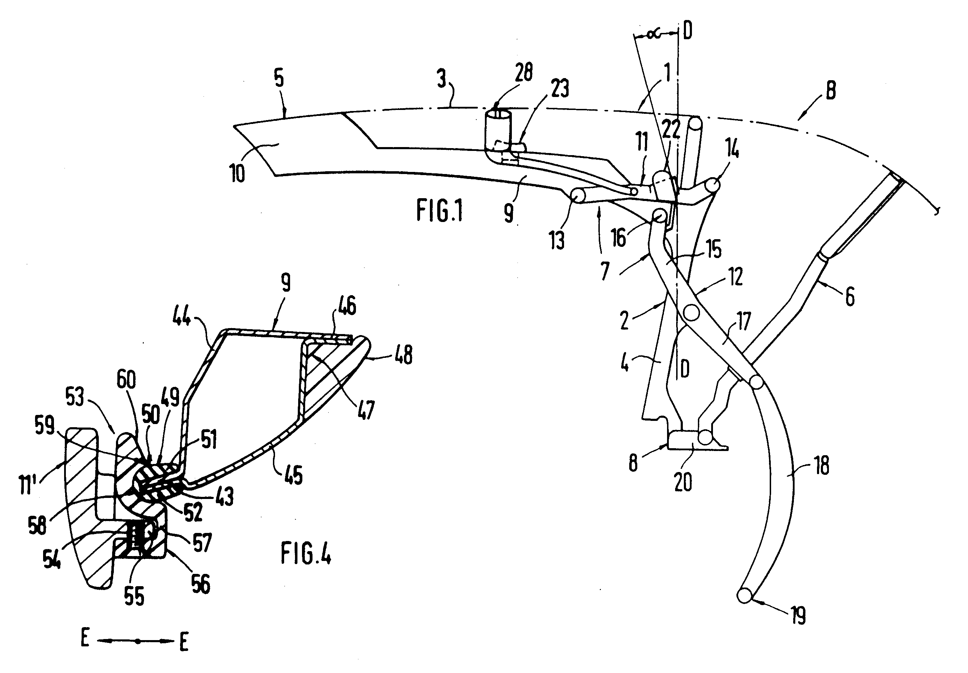

Fig. 1 zeigt ein Klappverdeck 1 für einen Personenwagen, das sich von einer hinter einer Rücksitzanlage angeordneten Querwand bis zu einem Windschutzscheibenrahmen erstreckt und dort mittels nicht näher dargestellten Haltegliedern lösbar befestigt ist. Das Klappverdeck 1 umfaßt ein Verdeckgestänge 2 und einen Verdeckbezug 3. Das Verdeckgestänge 2 setzt sich aus einem aufbauseitig gelagerten Hauptspriegel 4, einem Dachrahmen 5, einem Stützspriegel 6 und einem Gelenkhebelsystem 7 zusammen.

Der Hauptspriegel 4, der einen Fahrgastraum bogenförmig überspannt, ist in herkömmlicher Weise an einem Wagenkastenunterteil unter Vermittlung von Scharnieren 8 angelenkt. Der Dachrahmen 5 wird durch seitliche Längsholme 9 und einen benachbart der Windschutzscheibe verlaufenden Querträger 10 gebildet und ist einerseits über einen Dachrahmenlenker 11 und andererseits über einen Winkelhebel 12 gelenkig mit dem Hauptspriegel 4 verbunden.

Der Dachrahmenlenker 11 ist in Schließstellung B des Klappverdecks 1 etwa horizontal ausgerichtet und wirkt über einen Anlenkpunkt 13 mit dem Längsholm 9 und über einen weiteren Anlenkpunkt 14 mit dem Hauptspriegel 4 zusammen. Der Winkelhebel 12 ist in einem mittleren Bereich seiner Längserstreckung gelenkig am Hauptspriegel 4 gelagert. Ein oberer Hebelarm 15 des Winkelhebels 12 ist mit dem freien, hintenliegenden Ende 16 des Längsholmes 9 verbunden, wogegen der untere Hebelarm 17 mit einem Führungslenker 18 in Wirkverbindung steht, dessen anderes Ende 19 am Wagenkastenunterteil schwenkbar gelagert ist.

Der Stützspriegel 6 erstreckt sich - in Fahrtrichtung gesehen - hinter dem Hauptspriegel 4 und ist getrennt von diesem an einem gemeinsamen Scharnierbock 20 drehbar gelagert.

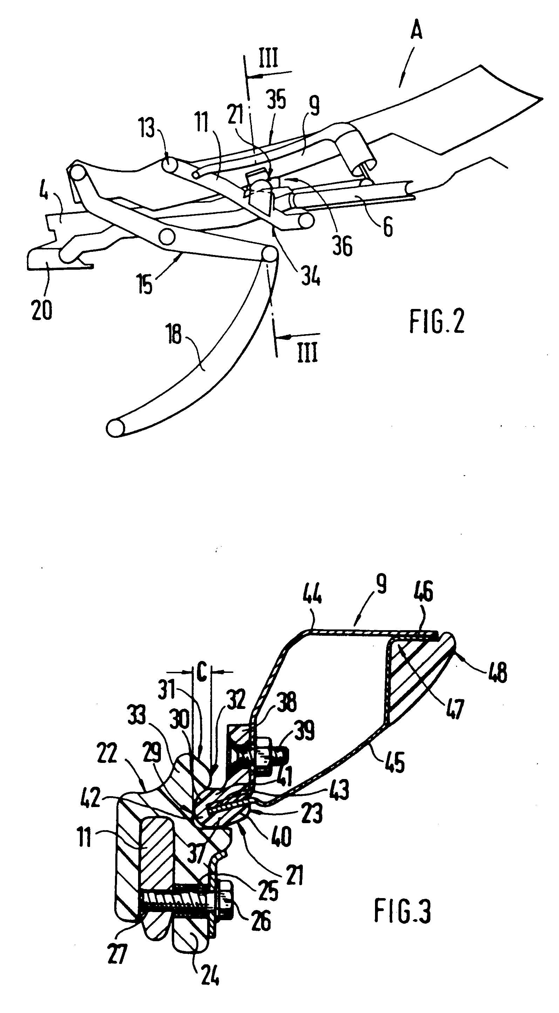

Um ein Hochschwenken des Klappverdecks 1 in seiner zurückgeklappten Offenstellung A zu vermeiden, ist am Klappverdeck 1 eine lösbare Arretiereinrichtung 21 vorgesehen. Die lediglich an Teilen des Verdeckgestänges 2 angeordnete Arretiereinrichtung 21 wird durch ein Aufnahmeteil 22 und ein formschlüssig mit diesem zusammenwirkendes Rastglied 23 gebildet. Das Aufnahmeteil 22 ist am Dachrahmenlenker 11 und das Rastglied 23 am seitlichen Längsholm 9 angeordnet. Gemäß einer ersten Ausführungsform (Fig. 3) ist das Aufnahmeteil 22 etwa U-förmig profiliert und wird von der Oberseite her auf den Dachrahmenlenker 11 aufgesetzt. Ein nach unten ragender Schenkel 24 des Aufnahmegliedes 22 weist eine Öffnung 25 zum Hindurchführen einer Befestigungsschraube 26 auf, wobei die Befestigungsschraube 26 in eine Gewindebohrung 27 des Dachrahmenlenkers 11 eingedreht ist.

Das Aufnahmeteil 22 weist auf der dem Längsholm 9 zugekehrten Seite eine muldenartige Aussparung 29 auf, in die ein seitlich abgestellter, etwa halbkreisförmig profilierter Endabschnitt 30 des Rastgliedes 23 eingreift. Oberhalb der Aussparung 29 ist am Aufnahmeteil 22 eine Anlaufschräge 31 für das Rastglied 23 vorgesehen. Zwischen der Anlaufschräge 31 und der Aussparung 29 ist ein Nocken 32 ausgebildet, der beim Öffnen und Schließen des Klappverdecks 1 durch das Rastglied 23 überdrückt wird. Der Nocken 32 verläuft mit Abstand C zum Grund der Aussparung 29, so daß in Offenstellung A des Klappverdecks 1 das Rastglied 23 den Nocken 32 hintergreift und selbsthemmend in der Aussparung 29 in Lage gehalten ist.

Zumindest die Anlaufschräge 31 und der Nocken 32 sind an einer federnden Zunge 33 des Aufnahmegliedes 22 angeordnet, wobei die Zunge 33 annähernd aufrecht ausgerichtet ist und das Rastglied 23 - in Höhenrichtung gesehen - abschnittsweise übergreift.

Beim Schließen des Klappverdecks 1 wird die federnde Zunge 33 durch das Rastglied 23 zur Seite hin, und zwar in Richtung Dachrahmenlenker 11 gedrückt, so daß nach dem Passieren des Nockens 32 das Rastglied 23 außer Eingriff mit der Aussparung 29 gelangt.

Das Aufnahmeteil 22 ist - in Schließstellung B des Klappverdecks 1 gesehen - unmittelbar vor dem Hauptspriegel 4 des Verdeckgestänges 2 angeordnet und verläuft unter einem spitzen Winkel α zu einer vertikalen Hilfsebene D-D. Das Rastglied 23 erstreckt sich bei geschlossenem Klappverdeck etwa unterhalb eines den Fahrgastraum bogenförmig überspannenden Hilfsspriegels 28. In Offenstellung A des Klappverdecks 1 bilden der Längsholm 9 und der Dachrahmenlenker 11 die Arme 34, 35 einer Schere 36, wobei der Anlenkpunkt 13 den Drehpunkt der Schere 36 darstellt. Durch die Arretiereinrichtung 21 werden die beiden Arme 34, 35 der Schere 36 gegeneinander fixiert, so daß ein selbsttätiges Hochschwenken des Klappverdecks 1 vermieden wird.

Das Rastglied 23 umfaßt gemäß Fig. 3 einen etwa U-förmig profilierten Klemmprofilabschnitt 37 und einen Haltesteg 38, der mittels einer Befestigungsschraube 39 mit dem Längsholm 9 verbunden ist. Der Klemmprofilabschnitt 37 besteht aus zwei parallel zueinander verlaufenden Schenkeln 40, 41, die über einen gerundeten Übergangsbereich 42 miteinander verbunden sind. Die beiden Schenkel 40, 41 liegen an gegenüberliegenden Seiten eines endseitigen Flansches 43 des Längsholmes 9 an und verkleiden diesen. Der gerundete Übergangsbereich 42 greift abschnittsweise in die Aussparung 29 des Aufnahmegliedes 22 ein. Der Längsholm 9 besteht aus zwei hohlträgerartig zusammengesetzten Blechpreßteilen 44, 45, die an gleichgerichteten, endseitigen Flanschen 43, 46 durch Punktschweißung miteinander verbunden sind. Das Rastglied 23 ist in der Schließstellung B des Klappverdecks 1 gesehen, auf den obenliegenden, dem Fahrgastraum zugekehrten Flansch 43 des Längsholmes 9 aufgesetzt. Eine stufenförmige Abstellung 47 des Längsholmes 9, die sich benachbart dem Flansch 46 befindet, wird durch ein Profilteil 48 aus Gummi, Kunststoff, Schaumstoff oder dergleichen verkleidet, wobei das Profilteil 48 dem Formverlauf des Längsholmes 9 angepaßt ist.

In Fig. 4 ist eine weitere Ausführungsform einer Arretiereinrichtung 21 dargestellt, die ein Rastglied 49 und ein Aufnahmeteil 53 umfaßt. Das Rastglied 49 wird durch einen U-förmig profilierten Klemmprofilabschnitt 50 gebildet, wobei die den Flansch 43 des Längsholmes 9 umgebenden Schenkel 51, 52 unter Vorspannung am Flansch 43 anliegen, so daß das Rastglied 49 selbsttätig in Lage gehalten ist.

Das Aufnahmteil 53 ist seitlich auf dem Dachrahmenlenker 11' aufgesetzt und über eine aufrecht verlaufende Befestigungsschraube 54 mit einer stegartigen Anformung 55 des Dachrahmenlenkers 11 verbunden. Das Aufnahmeteil 53 liegt an der Unterseite der Anformung 55 an und umgibt diese mit einem etwa U-förmig profilierten Abschnitt 56. Ein aufrecht verlaufender Wandabschnitt 57 des Aufnahmeteiles 53 weist im Bereich der Anformung 55 eine relativ geringe Wanddicke auf (Scharnierwirkung), wodurch der oberhalb der Anformung 55 liegende, eine Aussparung 58, einen Nocken 59 und eine Anlaufschräge 60 umfassende Bereich des Aufnahmeteiles 53 in Querrichtung E-E bewegbar ist.

Das Aufnahmeteil 22; 53 ist aus einem geeigneten Kunststoff wie beispielsweise Polyamid hergestellt, wogegen das Rastglied 23; 49 aus Gummi oder Kunststoff besteht und gegebenenfalls mit einer Versteifungseinlage versehen sein kann.

## Patentansprüche

1. Klappverdeck (1) für Personenwagen, das ein Verdeckgestänge (2) mit einem aufbauseitig gelagerten Hauptspriegel (4), seitlichen Längsholmen (9) und einem Gelenkhebelsystem (7) umfaßt, wobei jeder Längsholm (9) über einen Dachrahmenlenker (11) und einen Winkelhebel (12) gelenkig mit dem Hauptspriegel (4) verbunden ist, wobei jeder Längsholm (9) und der jeweilige Dachrahmenlenker (11, 11') die Arme (34, 35) einer Schere (36) bilden, so daß das Klappverdeck (1) von einer Schließstellung (B) in eine zurückgeklappte Offenstellung (A) bewegbar ist und umgekehrt, dadurch gekennzeichnet, daß zum Festlegen des Klappverdecks (1) in seiner vollständig zurückgeklappten Offenstellung (A) eine aus einem Rastglied (23, 49) und einem Aufnahmeteil (22, 53) gebildete lösbare Arretiereinrichtung (21) vorgesehen ist, wobei das Rastglied (23, 49) am seitlichen Längsholm (9) und das Aufnahmeteil (22, 53) am Dachrahmenlenker (11, 11') angeordnet sind, wobei die Arme (34, 35) in der Offenstellung (A) durch die Arretiereinrichtung (21) gegeneinander fixiert sind.

2. Klappverdeck nach Anspruch 1, dadurch gekennzeichnet, daß das Aufnahmeteil (22, 53) und/oder das Rastglied (23, 49) elastisch ausgebildet sind.

3. Klappverdeck nach Anspruch 1, dadurch gekennzeichnet, daß das etwa U-förmig profilierte Aufnahmeteil (22) von der Oberseite her auf den Dachrahmenlenker (11) aufgesetzt ist und diesen abschnittsweise umgibt, wobei ein nach unten ragender Schenkel (24) des Aufnahmeteils (22) über eine Befestigungsschraube (26) am Dachrahmenlenker (11) befestigt ist.

4. Klappverdeck nach den Ansprüchen 1 bis 3, dadurch gekennzeichnet, daß das Aufnahmeteil (22; 53) auf der dem Längsholm (9) zugekehrten Seite eine muldenförmige Aussparung (29; 58) aufweist, in die ein seitlich abgestellter, etwa halbkreisförmig profilierter Endabschnitt (30) des Rastgliedes (23; 49) eingreift.

5. Klappverdeck nach Anspruch 4, dadurch gekennzeichnet, daß oberhalb der Aussparung (29; 58) am Aufnahmeteil (22; 53) eine Anlaufschräge (31; 60) für das Rastglied (23; 49) vorgesehen ist, wobei zwischen Anlaufschräge (31; 60) und Aussparung (29; 58) ein Nocken (32, 59) angeordnet ist, der beim Öffnen und Schließen des Klappverdecks (1) durch das Rastglied (23; 49) überbrückt wird.

6. Klappverdeck nach den Ansprüchen 1 bis 5, dadurch gekennzeichnet, daß das Rastglied (23; 49) einen Klemmprofilabschnitt (37; 50) aufweist, der auf einen endseitigen Flansch (43) des Längsholmes (9) aufgesteckt ist und mit einem halbkreisförmigen Endabschnitt (30) in eine korrespondierend ausgebildete Aussparung (29; 58) des Aufnahmeteiles (22; 53) eingreift.

7. Klappverdeck nach Anspruch 1, dadurch gekennzeichnet, daß das Aufnahmeteil (53) mit einem U-förmigen Abschnitt (56) seitlich auf eine stegartige Anformung (55) des Dachrahmenlenkers (11') aufgesetzt ist, wobei ein unterer, an der Anformung (55) anliegender Schenkel des U-förmigen Abschnittes (56) mittels einer Befestigungsschraube (54) am Dachrahmenlenker (11') in Lage gehalten ist.

## Claims

1. A collapsible hood (1) for passenger cars which comprises a hood linkage (2) with a main hoop (4) mounted to the bodywork end, lateral longitudinal side-pieces (9) and a hinged lever system (7), each longitudinal side-piece (9) being hinged to the main hoop (4) via a roof frame guide rod (11) and an angle lever (12), each longitudinal side-piece (9) and the respective roof frame guide rod (11, 11') forming the arms (34, 35) of a pair of scissor-like shafts (36) in such a way that the collapsible hood (1) can be moved from a closed position (B) into a tilted-back open position (A) and vice versa, characterised in that, in order to fix the collapsible hood (1) in its completely tilted-back open position (A), a releasable locking arrangement (21) consisting of a detent member (23, 49) and a receiving part (22, 53) is provided, the detent member (23, 49) being arranged on the lateral longitudinal side-piece (9) and the receiving part (22, 53) on the roof frame guide rod (11, 11'), the arms (34, 35) being fixed against each other in the open position (A) by the locking arrangement (21).

2. A collapsible hood according to Claim 1, characterised in that the receiving part (22, 53) and/or the detent member (23, 49) are resilient.

3. A collapsible hood according to Claim 1, characterised in that the substantially U-shape-profiled receiving part (22) is placed on the roof frame guide rod (11) from the top and partly surrounds the latter, a downwardly-projecting limb (24) of the receiving part (22) being secured to the roof frame guide rod (11) by a fastening screw (26).

4. A collapsible hood according to Claims 1 to 3, characterised in that the receiving part (22; 53) has on the side facing the longitudinal side-piece (9) a trough-shaped recess (29; 58) into which a laterally arranged, substantially semicircularly profiled end portion (30) of the detent member (23; 49) engages.

5. A collapsible hood according to Claim 4, characterised in that an approach slope (31; 60) for the detent member (23; 49) is provided on the receiving part (22; 53) above the recess (29; 58), a cam (32, 59) being arranged between the approach slope (31; 60) and the recess (29; 58), over which cam the detent member passes (23; 49) when the collapsible hood (1) is being opened and closed.

6. A collapsible hood according to Claims 1 to 5, characterised in that the detent member (23; 49) has a clamping profile portion (37; 50) which is pushed on to a flange (43) near the end of the longitudinal side-piece (30) and engages, with a semicircular end portion (30), into a correspondingly formed recess (29; 58) of the receiving part (22; 53).

7. A collapsible hood according to Claim 1, characterised in that the receiving part (53) is placed, with a U-shaped portion (56), laterally on to a flange-like moulding (55) of the roof frame guide rod (11'), a lower limb, resting against the moulding (55), of the U-shaped portion (56) being kept in position on the roof frame guide rod (11') by means of a fastening screw (54).

**Revendications**

1. Toit décapotable (1) pour voiture de tourisme, comportant une tringlerie (2) avec un arceau principal (4), monté côté carrosserie, des longerons (9) latéraux et un système à levier articulé (7), chaque longeron (9) étant assemblé articulé avec l'arceau principal (4), par un bras de cadre de toit (11) et un levier coudé (12), chaque longeron (9) et le bras de cadre de toit (11, 11') formant les bras (34, 35) de ciseaux (36), de sorte que le toit décapotable (1) peut passer d'une position fermée (B) dans une position ouverte (A) rabattue et inversement, caractérisé en ce que pour fixer le toit décapotable (1) dans sa position ouverte (A), totalement rabattue, il est prévu un dispositif de blocage (21) amovible, formé par un organe d'arrêt (23, 49) et un logement (22, 53), l'organe d'arrêt (23, 49) étant prévu sur le longeron latéral (9) et le logement (22, 53) sur le bras de cadre de toit (11, 11'), les bras (34, 35) étant fixés l'un par rapport à l'autre dans la position ouverte (A), par le dispositif de blocage (21).

2. Toit décapotable selon la revendication 1, caractérisé en ce que le logement (22, 53) et/ou l'organe d'arrêt (23, 49) sont élastiques.

3. Toit décapotable selon la revendication 1, caractérisé en ce que le logement (22), profilé par exemple en U, est mis en place sur le bras de cadre de toit (11), à partir de la face supérieure et entoure en partie celui-ci, une branche (24), dirigée vers le bas, du logement (22), étant fixée sur le bras de cadre de toit (11), par une vis de fixation (26).

4. Toit décapotable selon les revendications 1 à 3, caractérisé en ce que le logement (22 ; 53) présente, sur le côté tourné vers le longeron (9), une découpe (29 ; 53) en forme de cuvette, dans laquelle s'engage une partie terminale (30) de l'organe d'arrêt (23 ; 49), profilée à peu près en demi-cercle et en retrait sur le côté.

5. Toit décapotable selon la revendication 4, caractérisé en ce qu'il est prévu, au-dessus de la découpe (29 : 58), sur le logement (22 ; 53), une surface oblique (31 ; 60) pour l'organe d'arrêt (23 ; 49), une came (32 ; 59) qui est pontée par l'organe d'arrêt (23 ; 49), lors de l'ouverture et de la fermeture du toit décapotable (1), étant placée entre la surface oblique (31 ; 60) et la découpe (29 ; 58).

6. Toit décapotable selon les revendications 1 à 5, caractérisé en ce que l'organe d'arrêt (23 ; 49) présente une partie profilée de serrage (37 ; 50) qui est placée sur une bride (43) latérale du longeron (9) et qui s'engage dans une découpe (29 ; 58) de forme correspondante, du logement (22 ; 53), par une partie terminale (30) semi-circulaire.

7. Toit décapotable selon la revendication 1, caractérisé en ce que le logement (53) est placé avec une partie (56) en U, sur le côté d'une pièce (55) formant cloison du bras de cadre de toit (11'), une branche inférieure, s'appliquant contre la pièce (55) de la partie (56) en U, étant maintenue en position sur le bras de cadre de toit (11'), au moyen d'une vis de fixation (54).

FIG.1

FIG.4

E ———→ E

EP 0 283 577 B1

FIG.2

FIG.3